Europäisches Patentamt

European Patent Office

Office européen des brevets

(19)

(11) Publication number: **0 011 371**
**B1**

# EUROPEAN PATENT SPECIFICATION

(12)

(45) Date of publication of patent specification: **22.06.83**

(51) Int. Cl.³: **B 29 D 31/00, B 29 C 25/00**

(21) Application number: **79302161.9**

(22) Date of filing: **10.10.79**

(54) Method and apparatus for opening fibrillated film networks.

(30) Priority: **21.10.78 GB 4147878**

(43) Date of publication of application:
**28.05.80 Bulletin 80/11**

(45) Publication of the grant of the patent:
**22.06.83 Bulletin 83/25**

(84) Designated Contracting States:
**AT BE CH DE FR GB IT LU NL SE**

(56) References cited:
**GB - A - 1 073 741**
**GB - A - 1 470 196**
**US - A - 3 140 330**
**US - A - 3 222 440**

(73) Proprietor: **PLASTICISERS LIMITED**
**Old Mills Drighlington, Nr.**
**Bradford, BD11 1BY Yorkshire (GB)**

(72) Inventor: **Johnson, Derek Raymond**
**White Lodge Old Ham Lane**
**Stourbridge West Midlands (GB)**
Inventor: **Firth, Colin**
**28 Dean Park Avenue Drighlington**
**Bradford West Yorkshire (GB)**
Inventor: **Ellis, David Geoffrey**
**2 Lidgett Park Gardens**
**Leeds 8 (GB)**
Inventor: **Ward, Trevor**
**20 Chapel Hill**
**Morley Leeds (GB)**

(74) Representative: **Stringer, David Hiram et al,**
**W.P. THOMPSON & CO Coopers Building Church**
**Street**
**Liverpool L1 3AB (GB)**

Courier Press, Leamington Spa, England.

Method and apparatus for opening fibrillated film networks

The present invention relates to a method and apparatus for opening fibrillated film networks.

In particular the present invention relates to a method and apparatus for opening a fibrillated tubular film formed by any suitable process.

Fibrillated tubular films may be opened by gripping the network at each side edge e.g. stentering, and stretching the network transversely to its length. However, when a fibrillated film is opened in the transverse direction there is a contraction in the length of the film and this reduction in length is, as will be appreciated, difficult to compensate for in a continuous operation wherein the side edges of the network are gripped. Also such methods of gripping necessarily limit the width of the film which may be fully and evenly opened.

The aim of the present invention is to provide a method and apparatus by means of which a fibrillated tubular network can be evenly and fully opened on a continuous basis, it being a simple matter to continuously compensate for the reduced length output in comparison with the input.

According to the present invention there is provided a method of opening fibrillated film networks comprising passing a fibrillated tubular film over a former which is tapered out from an initial circumference of less than or equal to the circumference of the unopened fibrillated tube, to a larger circumference appropriate to the degree of opening required of the fibrillated film the opened fibrillated film network being cut into two facing and parallel strips as it leaves the former (6).

The tubular film may be produced by the conventional processes of blown film technology when a suitable synthetic plastics material may be extruded through an annular ring die. The tubular film is then collapsed to a double-layer sheet by passing over rollers and further orientation of polymer chains in the film is effected in a stretching operation.

Preferably the synthetic plastics material is a polypropylene or a copolymer of propylene with another olefin such as ethylene or mixtures of such polymers and/or copolymers or a mixture of polypropylene with another polyolefin such as polyethylene.

Fibrillation of the two layer film is achieved by any suitable fibrillating process. One such process is described in our British Patent Specification No. 1,073,741 wherein fibrillation is achieved by passing the film over a rotating pinned roller. The fibrillation process chosen is controlled so that the two layers of film are not broken completely apart at the side edges of the film. Alternatively fibrillation may be limited to the central area of the two layer film leaving an unfibrillated film at each edge.

Fibrillation may also be limited to other specific areas to leave other unfibrillated strips.

The fibrillated tubular film may alternatively be manufactured by curling a flat film which has already been fibrillated by any suitable method, into a tube.

The fibrillated tubular film is then passed over the tapered former to open the film network.

In this new method, the input speed of the unopened film is higher than that of the output speed of the opened film by an amount to allow for the contraction in length of the film. There is no cockling of the film as it opens transversely and contracts longitudinally on the former because of the very low frictional resistance at the film to former contact and because of the relatively low opening tensions in the film. Also this method of opening guarantees that the full width of the fibrillated film is opened. Further, the opening is even across the circumference of the former.

According to a further aspect of the present invention there is provided apparatus for opening a tubular fibrillated film network, comprising a tapered former over which the tube of fibrillated film is passed, the former being tapered out from an initial circumference of less than or equal to that of the unopened fibrillated tube to a larger circumference appropriate to the degree of opening required of the fibrillated film, cutters being provided for cutting the tubular opened network as it leaves the former, to produce two substantially planar networks, parallel to each other.

The former may be a smooth rounded cone, a combination of elliptical rings, a flat elliptical plate or a bowed bar. It is however essential that the displacement of the network be kept to a minimum in one plane, e.g. the horizontal plane. Thus bowed bars, plates and formers with ellipsoidal shape of minimal minor axis are preferred.

To ensure this even opening through to the lay flat wound two ply sheets of fibrillated film, it is important that the topography of the former is designed that each element of the opened network travels the same distance over the former. The shape of the former after the largest value of minor axis must be developed so that this is possible, all points on the former at a specific transverse section being equidistant from the said initial circumference of the former.

The opening properties of the tubular fibrillated films and their handling and bonding properties in the final matrix being reinforced, may be enhanced by incorporation in the polymer of silanes, such as ethyl polysilicates and methacryloxypropyltrimethoxy silane types, silica (precipitated or aerogel), silicone glycol copolymer and polyvinylalcohol. These additives may be hydrophobed or not. Other additives include chalk, carbon, alumina, magnesia and other naturally occurring oxides and carbonates. Surface treatments may also be applied such as typical surfactants and antistat agents suitable for treating polypropylene and silica gels.

To stabilize the opened out fibrillated network, various alternative operations or combinations of operations are possible. These depend on the heat content of the network before opening, its previous thermal history with respect to relaxation or annealing processes (previously heat set networks are more difficult to stabilize), and the thickness of the film. To provide this stabilization heat may be applied through or at the former, or a stentering machine may be used to hold out the opened web. Alternatively the opened web may be heated by passage through a heat chamber or over a heated surface before collection on, for example, a winder. A further alternative is to steam or heat the web when collected by the winder.

The opened tubular web is separated into two separate layers by the provision of cutters which may, for example, take the form of a hot blade or other mechanical cutting device.

Such opened fibrillated networks, singly or multilayered may be used for reinforcing a water-hardening moss e.g. cement, resins, paper and other media, which are efficiently low in viscosity in their state before curing or dewatering. These networks also have interesting general textile properties which make them attractive for non-woven fabric end-uses which include interlinings, waddings and filtration cloths.

The present invention will now be further described, by way of example, with reference to the accompanying drawings, in which:—

Figure 1 diagrammatically illustrates the position of one embodiment of former according to the present invention, in an apparatus for producing a web network,

Figure 2 is a plan view of the former of Figure 1 in use,

Figure 3 is a diagrammatic side view of the former of Figures 1 and 2 showing the splitting of the tubular film,

Figure 4 illustrates one method of retaining the web in an opened condition,

Figure 5 illustrates in greater detail, the gripping means of Figure 4,

Figure 6 is a detail of the means of Figures 4 and 5 when in use,

Figure 7 is a perspective view of the former of Figures 1 to 4; and

Figure 8 diagrammatically illustrates a further embodiment of former in accordance with the present invention.

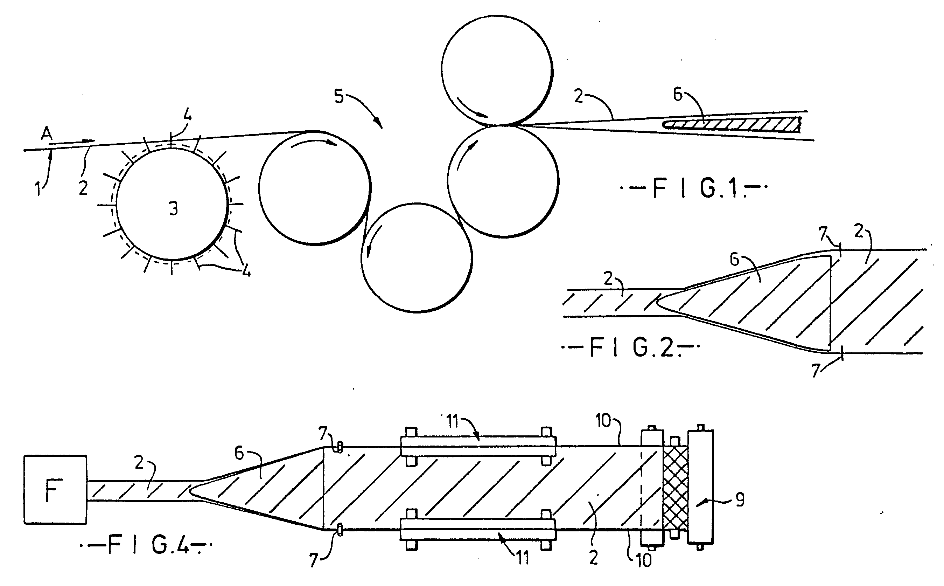

Apparatus for producing an opened web network from a tubular film is diagrammatically illustrated in Figure 1. The tubular film 1 which is fed in the direction indicated by arrow A is formed by any suitable method. It can be produced by extrusion through an annular ring die (not shown) or by curling a flat film into a tube. The tubular film is collapsed to a double-layer sheet 2 by, for example, being passed over rollers (not shown), and is passed over a rotating fibrillating roller 3 which has outwardly projecting pins 4 which create staggered slits in the sheet 2. This form of fibrillation is described in detail in our British Patent Specification No. 1,073,741. However, alternative fibrillation methods may be used as desired. As a further alternative the fibrillated sheet may be formed from one or more fibrillated sheets which are curled or joined to form the tube which is subsequently flattened.

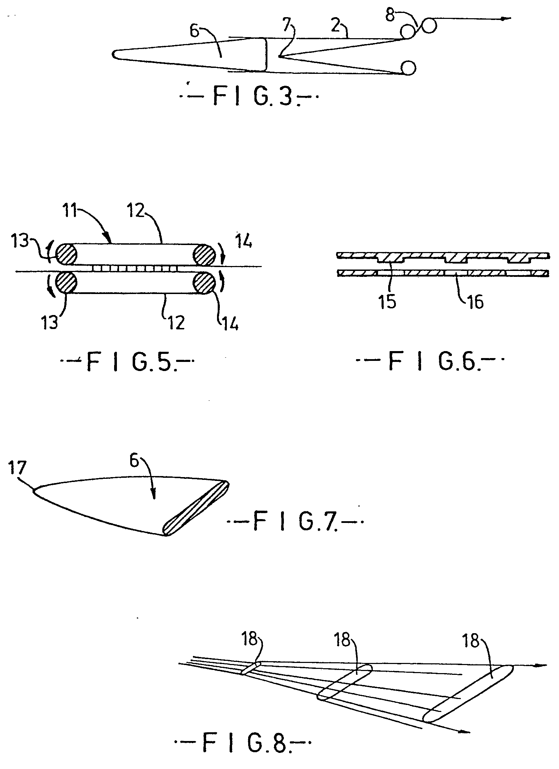

The fibrillated double-layer sheet 2 is then passed around a number of guide rollers generally designated 5, and is engaged over the tapered former 6. As can be best seen in Figure 2, the generally conical shape of former 6 causes the tubular film to expand resulting in the slits formed by fibrillation, opening to form an opened tubular network. Cutters 7 in the form of heated blades, slit the sides of the opened tube as it leaves former 6, thus converting the opened tubular network into two generally planar opened networks which may be collected together as at 8 in Figure 3, and passed to a winder assembly, as indicated at 9 in Figure 4. To compensate for the reduction in length of the network by virtue of the lateral stretching, winder assembly 9 collects the opened network at a slower rate than the rate at which the fibrillated film 2 is fed to former 6 by feeder F. This differential speed arrangement together with the tapered former 6 of the present invention, thus simply overcomes the problems experienced in prior art constructions, wherein lateral stretching is produced by outside gripping means. To prevent the opened network from retracting towards its original form after it has left former 6, the opened network can be treated with, for example, heat or the side edges 10 of the film can be gripped by suitable means such as the caterpillar grips 11 shown in Figures 4, 5 and 6. The caterpillar grips 11 each comprise two endless belts 12 between which the film passes, the belts being guided around rollers 13 and 14. As seen in Figure 6, the belts 12 have regularly spaced projections 15 on their outer surface and these projections 15 engage in the opened out slits 16 in the film, produced by fibrillation, and thus hold the film in its expanded state.

Figure 7 shows a perspective view of the former 6 which is tapered to a smooth point 17 and has a very small depth in comparison with its width. Whilst the illustrated former is solid it may alternatively be hollow and if so, the former can be filled with a heated fluid e.g. oil or water, to assist heating and stabilization of the opened web.

Figure 8 shows an alternative embodiment of former which comprises a combination of different size elliptical hoops 18. Whilst the minor axes of the hoops 18 are approximately the same, the major axes of the hoops vary so as to provide an overall configuration similar to that of the former of Figure 7. This has the advantage that it is cheap to manufacture. However, it is difficult to provide uniform heating for the web from the frame. However heat can be supplied directly to the web by convective and/or radiative transfer e.g. hot air and/or radiant heaters respectively.

An example of a specification for a typical tubular fibrillated network process is now provided:—

Specification

| | |
|---|---|
| Polypropylene | |
| Polymer (90%) | M.F.I.=1.5 |
| Polyethylene (10%) | H.D.P.E. M.F.I.=1.5 |
| Extruder | 220°C |
| Die | 230°C |
| First haul-off speed | 10m/min |
| Stretch haul-off speed | 75m/min |
| Fibrillator 650 rpm for 16 pins/cm | |
| Stretch oven temp | 150°C |
| Third haul-off speed | 68m/min |
| Relaxation oven temp | 120°C |
| Final film of 30 micron thickness (2 ply) | |
| For width of collapsed tube=20 cm | |

The tube was passed onto a wedge former of circumference 110 cm to produce 5×opening of the fibrillated network. The handling of fibrillated films of <30 micron and above 150 micron is envisaged to be practical.

The opening properties of the tubular fibrillated film and their handling and bonding properties in the final matrix being reinforced, can be enhanced by the incorporation in the polymer of silanes, such as polysilicates and methacryloxypropylytrimethoxy silane types, silica (precipitated or aerogel), silicone glycol copolymer and polyvinylalcohol. Other possible additives include chalk, carbon, aluminium, magnesia and other naturally occurring oxides and carbonates. Surface treatments may also be applied such as typical surfactants and antistat agents suitable for treating polypropylene and silica gels. Once opened the network can be stabilised by treatment with heat or it may be held open by mechanical means as described hereabove.

The present invention thus provides a simple but effective method and apparatus for opening fibrillated film networks. These networks are especially useful either singly or in multi layer arrangements, as a reinforcement in water hardening masses.

**Claims**

1. A method of opening a fibrillated tubular film characterised by passing a fibrillated tubular film (2) over a former (6) which is tapered out from an initial circumference of less than the circumference of the unopened fibrillated tube, to a larger circumference appropriate to the degree of opening required of the fibrillated film (2) the opened fibrillated film network being cut into two facing and parallel strips as it leaves the former (6).

2. A method as claimed in claim 1, in which heat is applied to stabilise the fibrillated film in its opened state.

3. A method as claimed in any one of the preceding claims, in which the fibrillated tubular film is made of a synthetic plastics material.

4. A method as claimed in claim 3, in which the plastics material is a polypropylene.

5. A method as claimed in claim 3, in which the plastics material is a copolymer of propylene with another olefin.

6. A method as claimed in any one of claims 1 to 5, in which the opened network is collected from the former (6) at a slower speed than the speed at which the fibrillated film (2) is fed to the former (6).

7. Apparatus for opening a tubular fibrillated film network, characterised by a tapered former (6) over which the tube of fibrillated film is passed, the former (6) being tapered out from an initial circumference of less than that of the unopened fibrillated tube to a larger circumference appropriate to the degree of opening required of the fibrillated film, cutters (7) being provided for cutting the tubular opened network as it leaves the former (6), to produce two substantially planar networks parallel to each other.

8. Apparatus as claimed in claim 7, in which the former (6) is a tapered cone which has a major and a minor axis when considered in transverse cross-section.

9. Apparatus as claimed in claim 8, in which the cone is hollow to enable a heating medium to be passed therethrough.

10. Apparatus as claimed in claim 7, in which the former (6) comprises at least two different size rings (18) arranged co-axially with respect to each other and parallel to each other, the rings (18) each having a major and a minor axis.

11. Apparatus as claimed in any one of claims 7 to 10, in which the former (6) is designed so that every point on the perimeter of a cross-section of the former (6) transverse to the intended direction of feed of the tubular film, is equidistant from the perimeter of any other transverse cross-section of the former (6).

12. Apparatus as claimed in any one of claims 7 to 11, in which grippers (11) are provided for gripping the side edges of the opened network after it leaves the former (6) to thus retain the opened configuration.

13. Apparatus as claimed in claim 12, in which the grippers (11) are formed by pairs of contiguous endless belts.

14. Apparatus as claimed in any one of claims 7 to 13, in which a winder assembly (9) is provided for collecting the opened network, the winder assembly (9) being arranged to collect the network at a slower speed than the speed at which it is fed to the former (6) by feeding means (F).

**Revendications**

1. Procédé d'ouverture d'un film tubulaire fibrillé, caractérisé par le fait qu'on fait passer le film tubulaire fibrillé (2) sur un gabarit (6) qui va en augmentant d'une circonférence initiale plus petite que la circonférence du tube fibrillé non ouvert à une grande circonférence appropriée du degré nécessaire d'ouverture du film fibrillé (2), le filet fibrillé ouvert étant coupé en deux bandes en regard et parallèles quand il quitte le gabarit (6).

2. Procédé selon la revendication 1, dans lequel de la chaleur est appliquée pour stabiliser le film fibrillé dans son état ouvert.

3. Procédé selon l'une des revendications 1 ou 2, dans lequel le film tubulaire fibrillé est en matière plastique synthétique.

4. Procédé selon la revendication 3, dans lequel la matière plastique est un polypropylène.

5. Procédé selon la revendication 3, dans lequel la matière plastique est un copolymère de propylène avec une autre oléfine.

6. Procédé selon l'une des revendications 1 à 5, dans lequel le filet ouvert est repris du gabarit (6) à une vitesse inférieure à celle à laquelle le film fibrillé (2) est amené au gabarit (6).

7. Dispositif d'ouverture d'un filet de film fibrillé tubulaire, caractérisé ar un gabarit effilé (6) sur lequel passe le tube de film fibrillé, ce gabarit (6) allant en augmentant d'une circonférence initiale plus petite que la circonférence du tube fibrillé non ouvert à une grande circonférence appropriée au degré nécessaire d'ouverture du film fibrillé, des éléments coupants (7) étant prévus pour couper le filet ouvert tubulaire quand il quitte le gabarit (6) afin de produire deux filets sensiblement plans parallèles.

8. Dispositif selon la revendication 7, dans lequel le gabarit (6) est un cône dont la section transversale a un grand axe et un petit axe.

9. Dispositif selon la revendication 8, dans lequel le cône est creux pour qu'il puisse y passer un fluide de chauffage.

10. Dispositif selon la revendication 7, dans lequel le gabarit (6) comprend au moins deux anneaux (18) de dimensions différentes, placés parallèlement et coaxialement, les anneaux (18) ayant chacun un grand axe et un petit axe.

11. Dispositif selon l'une des revendications 7 à 10, dans lequel le gabarit (6) est conçu de façon que tout point du périmètre d'une section du gabarit (6) perpendiculaire à la direction prévue d'amenée du film tubulaire soit équidistant du périmètre de toute autre section transversale du gabarit (6).

12. Dispositif selon l'une des revendications 7 à 11, dans lequel il est prévu des moyens de préhension (11) destinés à saisir les bords latéraux du filet ouvert après qu'il a quitté le gabarit (6) afin de lui faire conserver sa configuration ouverte.

13. Dispositif selon la revendication 12, dans lequel les moyens de préhension (11) sont formés par des paires de bandes sans fin contiguës.

14. Dispositif selon l'une des revendications 7 à 13, dans lequel il est prévu un dispositif d'enroulement (9) destiné à recueillir le filet ouvert, ce dispositif (9) étant agencé pour recueillir le filet à une vitesse inférieure à celle à laquelle il est amené au gabarit (6) par des moyens d'alimentation (F).

**Patentansprüche**

1. Verfahren zum Öffnen eines aufgesplitterten schlauchförmigen Filmes, dadurch gekennzeichnet, daß man einen aufgesplitterten schlauchförmigen Film (2) über einen Formteil (6) passieren läßt, welcher sich von einem anfänglichen Umfang, der geringer als der oder gleich dem Umfang des nicht geöffneten aufgesplitterten Schlauches ist, zu einem größeren Umfang, als für das vorgesehene Ausmaß für den aufgesplitterten Film (2) erforderlich ist, erweitert, und daß das geöffnete aufgesplitterte Film-Netzwerk beim Verlassen des Formteiles (6) in zwei einander gegenüberliegende und zueinander parallele Streifen zerschnitten wird.

2. Verfahren nach Anspruch 1, dadurch gekennzeichnet, daß zur Stabilisierung des aufgesplitterten Filmes in seinem geöffneten Zustand Wärme aufgebracht wird.

3. Verfahren nach einem der vorausgehenden Ansprüche, dadurch gekennzeichnet, daß der aufgesplitterte schlauchförmige Film aus einem synthetischen Plastik-Material hergestellt ist.

4. Verfahren nach Anspruch 3, dadurch gekennzeichnet, daß das Plastik-Material ein Polypropylen ist.

5. Verfahren nach Anspruch 3, dadurch gekennzeichnet, daß das Plastik-Material ein Kopolymer von Polypropylen und einem anderen Olefin ist.

**0011371**

6. Verfahren nach einem der Ansprüche 1 bis 5, dadurch gekennzeichnet, daß das geöffnete Netzwerk von dem Formteil (6) mit einer geringeren Geschwindigkeit als derjenigen, mit welcher der aufgesplitterte Film (2) dem Formteil (6) zugeführt wird, eingesammelt wird.

7. Vorrichtung zum Öffnen eines schlauchförmigen aufgesplitterten Film-Netzwerkes, gekennzeichnet durch einen sich erweiternden Formteil (6), über welchen der Schlauch aus aufgesplittertem Film geleitet wird, wobei sich der Formteil (6), ausgehend von einem anfänglichen Umfang, der kleiner als der oder gleich dem Umfang des ungeöffneten aufgesplitterten Schlauches ist, zu einem Umfang erweitert, der größer ist als das Ausmaß der vorgesehenen Öffnung für das aufgesplitterte geöffnete Netzwerk, sowie durch Schneideinrichtungen (7) zum Aufschneiden des schlauchförmigen geöffneten Netzwerkes beim Verlassen des Formteiles (6), um zwei ebene, parallel zueinander liegende Netzwerke herzustellen.

8. Vorrichtung nach Anspruch 7, dadurch gekennzeichnet, daß der Formteil (6) aus einem sich erweiternden Konus besteht, mit einer größeren und einer kleineren Achse bei Betrachtung im Querschnitt.

9. Vorrichtung nach Anspruch 8, dadurch gekennzeichnet, daß der Konus hohl ist, um ein Heizmedium durch ihn hindurchleiten zu können.

10. Vorrichtung nach Anspruch 7, dadurch gekennzeichnet, daß der Formteil (6) zumindest zwei Ringe (18) unterschiedlicher Größe aufweist, die koaxial und parallel zueinander angeordnet sind, und welche jeweils eine größere und eine kleinere Achse haben.

11. Vorrichtung nach einem der Ansprüche 7 bis 10, dadurch gekennzeichnet, daß der Formteil (6) so ausgeformt ist, daß jeder Punkt am Umriß eines quer zur Durchlaufrichtung des schlauchförmigen Filmes gelegten Querschnittes vom Umriß eines beliebigen anderen querverlaufenden Querschnittes des Formteiles gleichen Abstand hat.

12. Vorrichtung nach einem der Ansprüche 7 bis 11, dadurch gekennzeichnet, daß Greifer (11) zum Anfassen der Seitenkanten des geöffneten Netzwerkes nach dessen Abgang vom Formteil (6) vorgesehen sind, um den geöffneten Zustand des Netzwerkes aufrecht zu erhalten.

13. Vorrichtung nach Anspruch 12, dadurch gekennzeichnet, daß die Greifer (11) als Paare von übereinander liegenden endlosen Riemen ausgebildet sind.

14. Vorrichtung nach einem der Ansprüche 7 bis 13, dadurch gekennzeichnet, daß ein Aufwickelaggregat (9) zum Einsammeln des geöffneten Netzwerkes vorgesehen ist, durch welches das Netzwerk mit einer geringeren Geschwindigkeit, als es dem Formteil (6) durch Zuführmittel (F) zugebracht wird, einsammelbar ist.

-FIG.1.-

-FIG.2.-

-FIG.4.-

0011 371

0011371

— F I G. 3.—

—F I G.5.—

— F I G.6.—

—F I G.7.—

—F I G.8.—

2